# EUROPEAN PATENT APPLICATION

(11) **EP 4 362 566 A1**
(43) Date of publication of application: **01.05.2024**
(21) Application number: 23194860.5
(22) Date of filing: 01.09.2023
(51) Int. Cl.: H04W 56/00, H04W 52/02

(54) **POWER SAVING IN TELECOMMUNICATION SYSTEMS**

(30) Priority: 26.10.2022 GB 202215812
(71) Applicant: Nokia Technologies Oy, 02610 Espoo (FI)
(72) Inventor: KNUDSEN, Knud, Aabybro (DK); NOUSIAINEN, Tapio Ilmari, Oulu (FI); HVIID, Jan Torst, Klarup (DK); KAIKKONEN, Jorma Johannes, Oulu (FI); KINNUNEN, Pasi Eino Tapio, Oulu (FI)
(74) Representative: Nokia EPO representatives

(57) **Abstract**

Apparatus and methods to support power saving in a wireless communication network and more particularly to support discontinuous reception of a wake-up signal receiver at an apparatus comprising a wake-up signal receiver and a main radio receiver are outlined. One aspect provides an apparatus comprising a wake-up signal receiver; a main radio receiver; means for determining that the wake-up signal receiver is a candidate to implement discontinuous reception; means for assessing a signal received by the apparatus from a transmitting network node; and means for requesting, based upon the assessment of the signal received, transmission of a timing synchronisation beacon to support implementation of discontinuous reception by the wake-up signal receiver from at least one transmitting network node. Requesting a beacon allows a transmitting network to assess whether use of power and radio resource to support such a beacon is appropriate.

## Description

### TECHNOLOGICAL FIELD

Various example embodiments relate generally to power saving in a wireless communication network and more particularly to supporting discontinuous reception of a wake-up signal receiver at an apparatus comprising a wake-up signal receiver and a main radio receiver.

### BACKGROUND

Arrangements relate to enhancements for User Equipment (UE) energy saving in 5G New Radio (NR), and particularly focuses on UE and other similar devices which have extended battery lifetime targets of, for example, weeks or years.

Mechanisms for energy saving include provision of a separate, low-power, wake-up receiver at a UE. Provision of such a receiver can reduce UE power consumption. The intention of such a wake-up receiver is that the main radio of the UE can be in a sleep mode (or even powered off) to achieve power saving and be activated only upon reception of a wake-up signal, received by the wake-up receiver, from the network.

In other words, a network is configured to trigger a UE to wake-up when needed in an event-driven manner, by transmitting a special Wake-up Signal (WUS) to the UE. A dedicated low-power WUS receiver monitors for the WUS at the UE. When the WUS receiver receives the WUS for a UE, the WUS receiver is configured to trigger activation and wake-up of an ordinary NR transceiver and communication can commence.

Average power consumption of a wake-up receiver having reasonable sensitivity to receive a wake-up signal may remain higher than desired if the wake-up receiver is "always on". One way to provide energy saving is to provide ways in which the wakeup receiver can operate such that it is not always on.

Some adaptations to wireless communication devices, infrastructure and signalling may be required to support such energy saving.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the invention there is provided an apparatus, comprising: a wake-up signal receiver; a main radio receiver; means for determining that the wake-up signal receiver is a candidate to implement discontinuous reception; means for assessing a signal received by the apparatus from a transmitting network node; and means for requesting, based upon the assessment of the signal received, transmission of a timing synchronisation beacon to support implementation of discontinuous reception by the wake-up signal receiver from at least one transmitting network node.

In some example embodiments, the apparatus comprises user equipment.

In some example embodiments, the means for assessing is configured to assess whether a timing synchronisation beacon to support implementation of discontinuous reception by the wake-up signal receiver is being transmitted from a transmitting network node.

In some example embodiments, if the means for assessing assesses that a timing synchronisation beacon to support implementation of discontinuous reception by the wake-up signal receiver is being transmitted from a transmitting network node, the means for requesting is prevented from requesting transmission of a timing synchronisation beacon from at least one transmitting network node.

In some example embodiments, the means for assessing is configured to assess whether a strength of signal received from a transmitting network node is greater than or equal to a predetermined threshold.

In some example embodiments, the predetermined threshold comprises a signal strength at which a signal from a transmitting node is received at the apparatus indicative that a timing signal beacon transmitted by that transmitting network node could be received by the wake-up signal receiver.

In some example embodiments, the predetermined threshold depends upon: wake-up signal receiver sensitivity.

In some example embodiments, the predetermined threshold depends upon: transmitting network node type.

In some example embodiments, the transmitting network node type comprises at least one of: a network access node; a synchronisation reference network node of a sidelink group of which the apparatus is a member; and a transmitting network node which is a member of a sidelink group of which the apparatus is also member.

In some example embodiments, the apparatus may comprise: means for selecting a transmitting network node to send a request, based upon the assessment of the signal received.

In some example embodiments, the means for selecting is configured to select:
a network access node meeting a signal strength requirement indicative that a timing signal beacon transmitted by a network access node could be received by the wake-up signal receiver in preference to a sidelink network node meeting a signal strength requirement indicative that a timing signal beacon transmitted by a sidelink access node could be received by the wake-up signal receiver.

In some example embodiments, the means for selecting is configured to select:
a synchronisation reference network node of a sidelink group meeting a signal strength requirement indicative that a timing signal beacon transmitted by a sidelink access node could be received by the wake-up signal receiver in preference to another sidelink network node meeting a signal strength requirement indicative that a timing signal beacon transmitted by a sidelink access node could be received by the wake-up signal receiver.

In some example embodiments, if the means for selecting determines that the assessment of the signal received indicates that: no network access node meeting a signal strength requirement indicative that a timing signal beacon transmitted by a network access node could be received by the wake-up signal receiver is available; and no synchronisation reference network node of a sidelink group meeting a signal strength requirement indicative that a timing signal beacon transmitted by a sidelink access node could be received by the wake-up signal receiver is available; then selecting any other sidelink network node meeting the signal strength requirement indicative that a timing signal beacon transmitted by a sidelink access node could be received by the wake-up signal receiver.

In some example embodiments, if the means for selecting determines that the assessment of the signal received indicates that: a network access node meeting a signal strength requirement indicative that a timing signal beacon transmitted by a network access node could be received by the wake-up signal receiver is available; and a synchronisation reference network node of a sidelink group meeting a signal strength requirement indicative that a timing signal beacon transmitted by a sidelink access node could be received by the wake-up signal receiver is available; and the synchronisation reference network node is determined to be out of coverage of the network access node; then selecting both the network access node and the out of coverage synchronisation reference network node.

In some example embodiments, if the means for selecting determines that the assessment of the signal received indicates that: a network access node meeting a signal strength requirement indicative that a timing signal beacon transmitted by a network access node could be received by the wake-up signal receiver is available; and a synchronisation reference network node of a sidelink group meeting a signal strength requirement indicative that a timing signal beacon transmitted by a sidelink access node could be received by the wake-up signal receiver is available; and the synchronisation reference network node is determined to be out of coverage of the network access node; then selecting one of: the network access node and the out of coverage synchronisation reference network node in dependence upon which is determined to have the shortest discontinuous reception period.

In some example embodiments, the apparatus may comprise: means for receiving a response to the request for transmission of a timing synchronisation beacon to support implementation of discontinuous reception by the wake-up signal receiver from the at least one transmitting network node.

In some example embodiments, the response comprises one or more details of the timing synchronisation beacon to be transmitted by the at least one transmitting network node.

In some example embodiments, the means for receiving is configured to receive more than one response to the request for transmission of a timing synchronisation beacon to support implementation of discontinuous reception by the wake-up signal receiver from more than one transmitting network node.

In some example embodiments, the apparatus may comprise: means for implementing discontinuous reception by the wake-up signal receiver in accordance with the received response to the request for transmission of a timing synchronisation beacon.

In some example embodiments, the apparatus may comprise: means to select a discontinuous reception regime to implement, where more than one response to the request for transmission of a timing synchronisation beacon to support implementation of discontinuous reception by the wake-up signal receiver from more than one transmitting network node is received.

In some example embodiments, the means to select a discontinuous reception regime to implement is configured to use the wakeup receiver in relation to the transmitting network node which sent a response and has the shortest discontinuous reception period.

In some example embodiments, if receiving a timing synchronisation beacon from a transmitting network node, the means for assessing is configured to continue to assess the signal received by the apparatus from the network node transmitting the timing synchronisation beacon; and the apparatus comprises: means for indicating, based upon the assessment of the signal received, that the timing synchronisation beacon from the network node transmitting the timing synchronisation beacon cannot be received by the wake-up signal receiver.

In some example embodiments, the means for indicating is configured to assess whether a strength of signal received from the network node transmitting the timing synchronisation beacon is greater than or equal to a predetermined threshold.

In some example embodiments, the predetermined threshold comprises a signal strength indicative that a timing signal beacon transmitted by that transmitting network node could be received by the wake-up signal receiver.

In some example embodiments, the predetermined threshold depends upon: wake-up signal receiver sensitivity.

In some example embodiments, the predetermined threshold depends upon: transmitting network node type.

According to various, but not necessarily all, example embodiments of the invention there is provided an apparatus comprising: means for receiving a request, from apparatus comprising a wake-up signal receiver and a main radio receiver, for transmission of a timing synchronisation beacon to support implementation of discontinuous reception by the wake-up signal receiver of said apparatus.

In some example embodiments, the apparatus may comprise: means for assessing whether the timing synchronisation beacon is supportable by the apparatus.

In some example embodiments, the assessment may comprise: assessment of whether the apparatus is already transmitting a timing synchronisation beacon.

In some example embodiments, the assessment may comprise: assessment of power available to the apparatus.

In some example embodiments, the assessment may comprise: assessment of resource available to support the requested timing synchronisation beacon.

In some example embodiments, the assessment may comprise: assessment of received signal strength of the request from the apparatus comprising the wake-up signal receiver and main radio receiver.

In some example embodiments, assessing comprises: requesting resource to support transmission of a timing synchronisation beacon by the apparatus.

In some example embodiments, the apparatus may comprise: means for transmitting a response to the request for transmission of a timing synchronisation beacon.

In some example embodiments, the response may comprise: one or more details of the timing synchronisation beacon to be transmitted by the at least one transmitting network node.

In some example embodiments, the apparatus may comprise: a network access node; a synchronisation reference network node of a sidelink group; a network node which is a member of a sidelink group.

According to various, but not necessarily all, example embodiments of the invention there is provided a method, comprising: determining that a wake-up signal receiver, or an apparatus comprising a wake-up receiver and a main radio receiver, is a candidate to implement discontinuous reception; assessing a signal received by the apparatus from a transmitting network node; and requesting, based upon the assessment of the signal received, transmission of a timing synchronisation beacon to support implementation of discontinuous reception by the wake-up signal receiver from at least one transmitting network node.

In some example embodiments, the method comprises a method performed by user equipment.

In some example embodiments, assessing comprises assessing whether a timing synchronisation beacon to support implementation of discontinuous reception by the wake-up signal receiver is being transmitted from a transmitting network node.

In some example embodiments, if a timing synchronisation beacon to support implementation of discontinuous reception by the wake-up signal receiver is assessed as being transmitted from a transmitting network node, then preventing transmission of a request for a timing synchronisation beacon from at least one transmitting network node.

In some example embodiments, assessing comprises assessing whether a strength of signal received from a transmitting network node is greater than or equal to a predetermined threshold.

In some example embodiments, the predetermined threshold comprises a signal strength at which a signal from a transmitting node is received at the apparatus indicative that a timing signal beacon transmitted by that transmitting network node could be received by the wake-up signal receiver.

In some example embodiments, the predetermined threshold depends upon: wake-up signal receiver sensitivity.

In some example embodiments, the predetermined threshold depends upon: transmitting network node type.

In some example embodiments, the transmitting network node type comprises at least one of: a network access node; a synchronisation reference network node of a sidelink group of which the apparatus is a member; and a transmitting network node which is a member of a sidelink group of which the apparatus is also member.

In some example embodiments, the method comprises: selecting a transmitting network node to send a request, based upon the assessment of the signal received.

In some example embodiments, selecting comprises selecting a network access node meeting a signal strength requirement indicative that a timing signal beacon transmitted by a network access node could be received by the wake-up signal receiver in preference to a sidelink network node meeting a signal strength requirement indicative that a timing signal beacon transmitted by a sidelink access node could be received by the wake-up signal receiver.

In some example embodiments, selecting comprises selecting a synchronisation reference network node of a sidelink group meeting a signal strength requirement indicative that a timing signal beacon transmitted by a sidelink access node could be received by the wake-up signal receiver in preference to another sidelink network node meeting a signal strength requirement indicative that a timing signal beacon transmitted by a sidelink access node could be received by the wake-up signal receiver.

In some example embodiments, if it is determined that the assessment of the signal received indicates that: no network access node meeting a signal strength requirement indicative that a timing signal beacon transmitted by a network access node could be received by the wake-up signal receiver is available; and no synchronisation reference network node of a sidelink group meeting a signal strength requirement indicative that a timing signal beacon transmitted by a sidelink access node could be received by the wake-up signal receiver is available; then selecting any other sidelink network node meeting the signal strength requirement indicative that a timing signal beacon transmitted by a sidelink access node could be received by the wake-up signal receiver.

In some example embodiments, if selecting determines that the assessment of the signal received indicates that: a network access node meeting a signal strength requirement indicative that a timing signal beacon transmitted by a network access node could be received by the wake-up signal receiver is available; and a synchronisation reference network node of a sidelink group meeting a signal strength requirement indicative that a timing signal beacon transmitted by a sidelink access node could be received by the wake-up signal receiver is available; and the synchronisation reference network node is determined to be out of coverage of the network access node; then selecting both the network access node and the out of coverage synchronisation reference network node.

In some example embodiments, if selecting determines that the assessment of the signal received indicates that: a network access node meeting a signal strength requirement indicative that a timing signal beacon transmitted by a network access node could be received by the wake-up signal receiver is available; and a synchronisation reference network node of a sidelink group meeting a signal strength requirement indicative that a timing signal beacon transmitted by a sidelink access node could be received by the wake-up signal receiver is available; and the synchronisation reference network node is determined to be out of coverage of the network access node; then selecting one of: the network access node and the out of coverage synchronisation reference network node in dependence upon which is determined to have the shortest discontinuous reception period.

In some example embodiments, the method may comprise: receiving a response to the request for transmission of a timing synchronisation beacon to support implementation of discontinuous reception by the wake-up signal receiver from the at least one transmitting network node.

In some example embodiments, the response comprises one or more details of the timing synchronisation beacon to be transmitted by the at least one transmitting network node.

In some example embodiments, receiving comprises receiving more than one response to the request for transmission of a timing synchronisation beacon to support implementation of discontinuous reception by the wake-up signal receiver from more than one transmitting network node.

In some example embodiments, the method comprises: implementing discontinuous reception by the wake-up signal receiver in accordance with the received response to the request for transmission of a timing synchronisation beacon.

In some example embodiments, the method comprises: selecting a discontinuous reception regime to implement, where more than one response to the request for transmission of a timing synchronisation beacon to support implementation of discontinuous reception by the wake-up signal receiver from more than one transmitting network node is received.

In some example embodiments, selecting a discontinuous reception regime to implement comprises using the wakeup receiver in relation to the transmitting network node which sent a response and has the shortest discontinuous reception period.

In some example embodiments, if receiving a timing synchronisation beacon from a transmitting network node, assessing comprises assessing the signal received by the apparatus from the network node transmitting the timing synchronisation beacon; and indicating, based upon the assessment of the signal received, that the timing synchronisation beacon from the network node transmitting the timing synchronisation beacon cannot be received by the wake-up signal receiver.

In some example embodiments, indicating comprises assessing whether a strength of signal received from the network node transmitting the timing synchronisation beacon is greater than or equal to a predetermined threshold.

In some example embodiments, the predetermined threshold comprises a signal strength indicative that a timing signal beacon transmitted by that transmitting network node could be received by the wake-up signal receiver.

In some example embodiments, the predetermined threshold depends upon: wake-up signal receiver sensitivity.

In some example embodiments, the predetermined threshold depends upon: transmitting network node type.

According to various, but not necessarily all, example embodiments of the invention there is provided a method, comprising: receiving a request from an apparatus comprising a wake-up signal receiver and a main radio receiver for transmission of a timing synchronisation beacon to support implementation of discontinuous reception by the wake-up signal receiver of said apparatus.

In some example embodiments, the method may comprise: assessing whether the timing synchronisation beacon is supportable by the apparatus.

In some example embodiments, assessing may comprise: assessment of whether the apparatus is already transmitting a timing synchronisation beacon.

In some example embodiments, assessing may comprise: assessment of power available to the apparatus.

In some example embodiments, assessing may comprise: assessment of resource available to support the requested timing synchronisation beacon.

In some example embodiments, assessing may comprise: assessment of received signal strength of the request from the apparatus comprising the wake-up signal receiver and main radio receiver.

In some example embodiments, assessing comprises: requesting resource to support transmission of a timing synchronisation beacon by the apparatus.

In some example embodiments, the method may comprise: transmitting a response to the request for transmission of a timing synchronisation beacon.

In some example embodiments, the response may comprise: one or more details of the timing synchronisation beacon to be transmitted by the at least one transmitting network node.

In some example embodiments, the method may be performed by: a network access node; a synchronisation reference network node of a sidelink group; a network node which is a member of a sidelink group.

According to various, but not necessarily all, example embodiments of the invention there is provided an apparatus, comprising: a wake-up signal receiver; a main radio receiver; circuitry for determining that the wake-up signal receiver is a candidate to implement discontinuous reception; circuitry for assessing a signal received by the apparatus from a transmitting network node; and circuitry for requesting, based upon the assessment of the signal received, transmission of a timing synchronisation beacon to support implementation of discontinuous reception by the wake-up signal receiver from at least one transmitting network node.

According to various, but not necessarily all, example embodiments of the invention there is provided an apparatus comprising: circuitry for receiving a request, from apparatus comprising a wake-up signal receiver and a main radio receiver, for transmission of a timing synchronisation beacon to support implementation of discontinuous reception by the wake-up signal receiver of said apparatus.

According to various, but not necessarily all, example embodiments of the invention there is provided a computer program product which, when executed by a processor on an apparatus, is operable to control the apparatus to perform steps comprising: determining that a wake-up signal receiver, or an apparatus comprising a wake-up receiver and a main radio receiver, is a candidate to implement discontinuous reception; assessing a signal received by the apparatus from a transmitting network node; and requesting, based upon the assessment of the signal received, transmission of a timing synchronisation beacon to support implementation of discontinuous reception by the wake-up signal receiver from at least one transmitting network node.

According to various, but not necessarily all, example embodiments of the invention there is provided a computer program product which, when executed by a processor on an apparatus, is operable to control the apparatus to perform steps comprising: receiving a request from an apparatus comprising a wake-up signal receiver and a main radio receiver for transmission of a timing synchronisation beacon to support implementation of discontinuous reception by the wake-up signal receiver of said apparatus.

According to various, but not necessarily all, example embodiments of the invention there is provided an apparatus, comprising: at least one processor; and at least one memory including computer program code; the at least one memory and the computer program code configured to, with the at least one processor, cause the apparatus at least to perform: determining that a wake-up signal receiver, or an apparatus comprising a wake-up receiver and a main radio receiver, is a candidate to implement discontinuous reception; assessing a signal received by the apparatus from a transmitting network node; and requesting, based upon the assessment of the signal received, transmission of a timing synchronisation beacon to support implementation of discontinuous reception by the wake-up signal receiver from at least one transmitting network node.

According to various, but not necessarily all, example embodiments of the invention there is provided an apparatus, comprising: at least one processor; and at least one memory including computer program code; the at least one memory and the computer program code configured to, with the at least one processor, cause the apparatus at least to perform: receiving a request from an apparatus comprising a wake-up signal receiver and a main radio receiver for transmission of a timing synchronisation beacon to support implementation of discontinuous reception by the wake-up signal receiver of said apparatus.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates schematically operation of user equipment UE comprising a low-power wake-up receiver (WUR);
Figure 2 is a table illustrating various typical almost zero-power receivers comparing sensitivity and power consumption;
Figure 3 illustrates schematically example sequences used to generate an ON symbol by an OFDM transmitter;
Figure 4 illustrates schematically main components of a simple low power receiver;
Figure 5 illustrates schematically an arrangement in which discontinuous reception is implemented by a wakeup receiver;
Figure 6 is a signalling diagram illustrating one possible arrangement to activate and deactivate a WUS beacon;
Figure 7 is a signalling diagram illustrating one possible arrangement to activate and deactivate a WUS beacon;
Figure 8 is a signalling diagram illustrating one possible arrangement to activate and deactivate a WUS beacon;
Figure 9 shows apparatus in a communication system according to an example embodiment; and
Figure 10 shows a flow diagram illustrating steps in methods performed at network nodes according to some example embodiments.

### DETAILED DESCRIPTION

Before discussing the example embodiments in any more detail, first the relevant context which motivates approaches in accordance with arrangements is described.

Arrangements relate to enhancements for User Equipment (UE) energy savings in 5G New Radio (NR), and particularly focuses on UE and other similar devices which have extended battery lifetime targets of, for example, weeks or years.

Such devices include those without a continuous energy source, for example, UE and other devices which are configured to use small rechargeable and/or non-rechargeable single coin cell batteries. Such UE and devices include those for vertical use cases including sensors and actuators that are deployed extensively for monitoring, measuring, charging, and similar. Generally, such vertical use devices comprise batteries which are not rechargeable and expected to last at least few years. Devices for which it is desired to provide a long battery life, or low energy use, may include wearables including: smart watches, smart rings, eHealth related devices, and medical monitoring devices. It is challenging to sustain a battery life of up to 1-2 weeks, as required, with typical battery capacity.

Some of the UE and devices which fall into the categories of the type set out above (for example, sensors, actuators and wearables) not only require a long battery life, but are also required to support latency-critical services. Examples of such services supportable by UE devices include: sensors for fire detection and extinguishing. In such latency critical cases, use of techniques such as extended Discontinuous Reception (eDRX) which allow a UE to extend a periodicity according to which the UE wakes up to monitor for paging (thereby reducing average power consumption), are not useful choices, since they result in an unacceptable communication latency.

Thus, alternative mechanisms to enable UE power saving are desirable.

Such alternative mechanisms include provision of of a separate, low-power, wake-up receiver at the UE. Provision of such a receiver can reduce UE power consumption. The intention of such a wake up receiver is that the main radio of the UE can be in a sleep mode (or even powered off) to achieve power saving and be activated only upon reception of a wake-up signal, received by the wake-up receiver, from the network.

In other words, the network is configured to trigger a UE to wake-up when needed in an event-driven manner, by transmitting a special Wake-up Signal (WUS) to the UE. The dedicated low-power WUS receiver monitors for the WUS at the UE. When the WUS receiver receives the WUS for a UE, the WUS receiver is configured to trigger activation and wake-up of an ordinary NR transceiver and communication can commence.

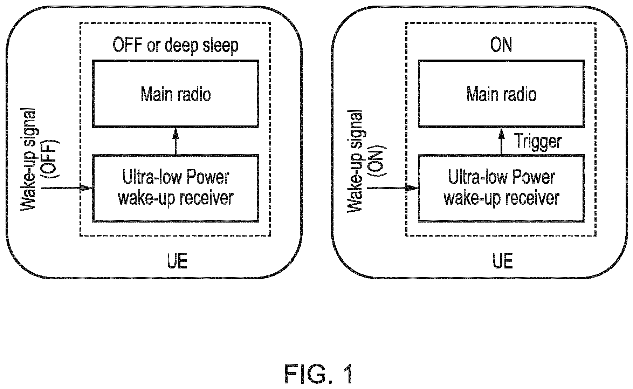

The ultra-low power receiver wakes up the main radio transceiver. Otherwise, the main radio is OFF or kept in a deep sleep mode, unless woken by the UE itself in the case of mobile originated calls. FIG. 1 illustrates schematically such operation of user equipment UE comprising a low-power wake-up receiver (WUR);

Generally, it is assumed that the low-power wake-up receiver is operated in an always 'on' manner and achieve very low power consumption. Such low-power receivers are designed to consume significantly less power than a traditional NR transceiver. Such power efficiency can be achieved by design, for example, by implementation of an appropriate simple wake-up signal (WUS) and the use of appropriate dedicated hardware for monitoring of such a WUS. Such hardware may have limited functionality and may, for example, only be able to receive signals which have the simplicity of the implemented WUS.

There is a trade-off between power consumption achievable and RF sensitivity (coverage) of a low power WUS receiver. In particular, a low power WUS receiver will typically have a sensitivity which is usually significantly worse than the main NR or WIFI receiver. By way of illustration: standards (RWS-210168) set out that:
- Main receiver in NR idle

RF sensitivity -100 dBm is associated with an average power consumption of 30-50 mW.

Typically, the NR receiver can operate at around -120 dBm.
- Low power WUS receiver

For example, an almost zero power receiver using a passive circuit with envelope detector
RF sensitivity ~-70/80 dBm with an average power consumption of 7.4 nW.

This means a low power WUS receiver can offer a significant power saving, but with some sensitivity degradation.

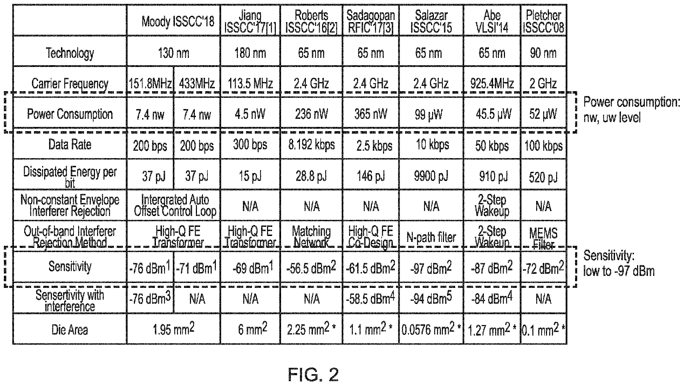

Figure 2 is a table illustrating various typical almost zero-power receivers comparing sensitivity and power consumption. The typical receivers illustrated use a CMOS RF front-end with on-off-key (OOK) based on energy detection.

Low power receivers are supported as a result of appropriate implementation of on off signals and hardware selection as set out in more detail below:

### On-Off-Key (OOK) and low power Wake-up Receiver (WUR)

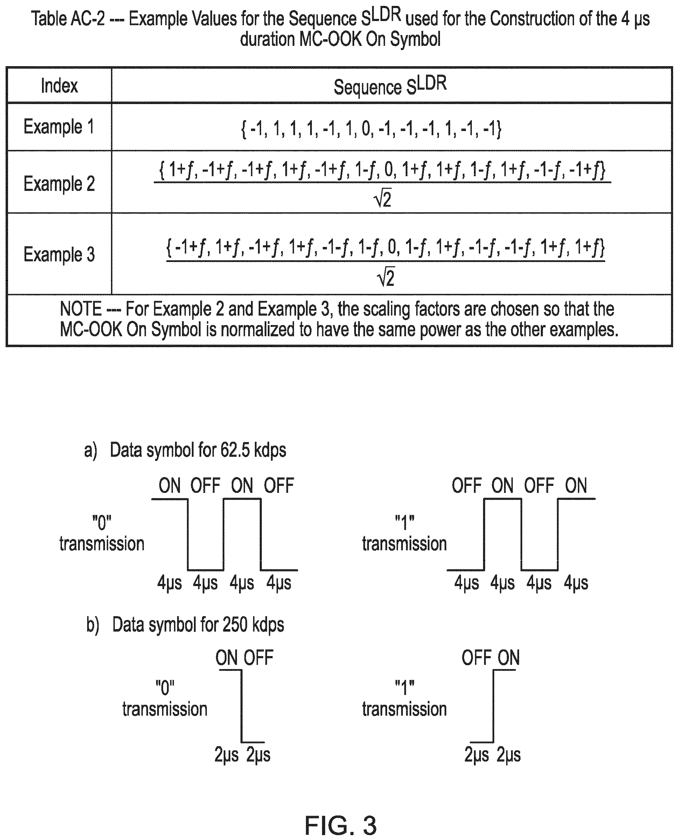

Figure 3 illustrates schematically example sequences used to generate an ON symbol by an OFDM transmitter. The sequences use maximum amplitude of Resource Elements (except a DC carrier in the middle) thereby maximizing energy in a Multi Carrier (MC) OOK "ON" symbol. When transmitting the "OFF" symbol, the sequences use an amplitude of 0, thereby minimizing the energy in an MC-OOK "OFF" symbol.

Each transmitted bit ("0" or "1") is translated into a sequence of alternating "ON" and "OFF" symbols, where the sub-carriers in the ON symbols have high energy (where all sub carriers except DC have maximum amplitude) and the sub carriers in the OFF symbols are all 0.

### Wake-up Receiver (WUR) Components

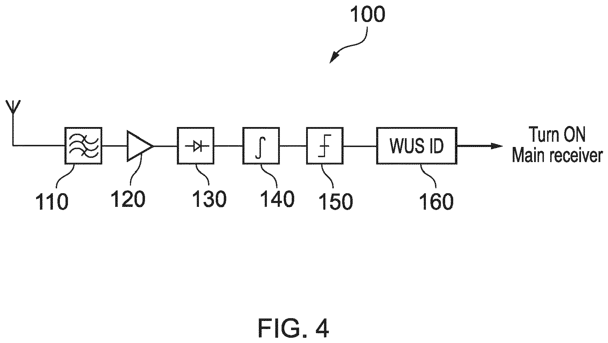

Figure 4 illustrates schematically main components of one possible simplified OOK receiver, which would also work for a MC-OOK signal as set out above. The receiver 100 comprises: a bandpass filter 110 for channel selection; a low noise amplifier (LNA) 120, and envelope detector 130, an integrator 140, a comparator 150 and a correlator 160.

The bandpass filter 110 is configured to remove the signal outside the frequency range covered by the subcarriers in the MC-OOK signal. The LNA 120 is configured to amplify the signal before it is fed into the envelope detector 130. After passing through the envelope detector, the signal comprises a low frequency signal being either: low when a 0 is received or high when a 1 is received. By integrating the signal over each symbol duration using integrator 140, the signal noise is suppressed, and the comparator 150 is then able to determine whether the received symbol is a 0 or 1 by comparing with an average signal level. Finally, the received bit stream is fed to a correlator which correlates the detected bit sequence with the sequence which is expected for a WUS message such as those illustrates in Figure 3.

A receiver such as that shown in Figure 4 not require a mixer, an analogue to digital converter (ADC) or advanced baseband processing, so it represents a very power efficient solution. In practice, any real WUS receiver will include some further complexity, but Figure 4 serves to illustrate that the main components of the receiver can be very simple which is why the OOK and MC-OOK signals illustrated in Figure 3 are attractive modulation schemes ideal for selection if designing a WUS signal for a low power wake-up receiver.

Having set out the context surrounding arrangements, a general overview of arrangements described is provided.

It is a challenge to achieve an average power consumption of less than 100uW and at the same time achieve high sensitivity in a 5G network if implementing an "always on" low power Wake-up Receiver.

Once possible mechanism to support power savings is that of adopting the concept of discontinuous reception (DRX) in the wakeup receiver. If the receiver uses discontinuous reception, the power consumption during the short ON periods can be significantly higher than the required average power consumption. Such an implementation of course, is subject to a latency restriction and may require provision of a more advanced low power receiver than the kind illustrated in Figure 4. For example, an appropriate receiver may include a Low Noise Amplifier, which can improve the noise figure of the low power receiver and thereby also improve the sensitivity (and coverage) of the receiver. DRX provides a mechanism to achieve low power consumption even if an LNA is added. The LNA consumes a significant amount of power, but with DRX it will only impact the short ON durations.

Discontinuous reception requires that a receiver maintains a timing alignment with a transmitter, such that they have common understanding about timing of wakeup occasions. In other words: the transmitter is configured to transmit WUS messages to the receiver at a wakeup occasion since the receiver will only be configured to be receiving during such a wakeup occasion period.

In order for a wakeup receiver operating using DRX methods to be able to maintain timing alignment with a transmitter, the receiver needs a signal which it can use to track the timing of the transmitter. Arrangements described herein refer to such a signal as a "WUS beacon". The WUS beacon is periodically broadcasted by a transmitter in order to keep the receiver(s) aligned in time. At the receiver, the timing of a received WUS beacon is tracked. A receiver in accordance with arrangements is configured to know a fixed relative distance (in time) from the WUS beacon to a designated wakeup occasion. Both a WUS beacon and a (DRX) WUS wakeup occasion are received periodically, but they do not necessarily have the same periodicity.

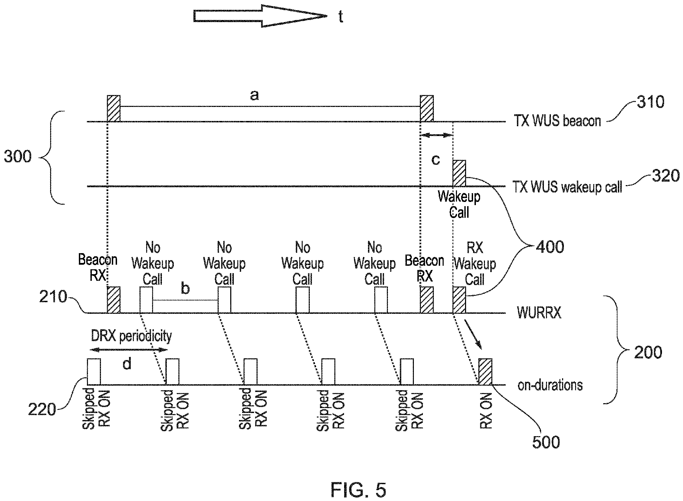

Figure 5 illustrates schematically an arrangement in which discontinuous reception is implemented by a wakeup receiver. Such a scenario is supported by provision of a broadcast WUS beacon.

Figure 5 shows schematically operation of a UE or device 200 comprising a low power wake-up receiver (WUR) 210 and a main receiver 220. The WUR 210 is configured to support operation other than "always on". In particular, the WUR 210 is configured to support a discontinuous reception regime. In order to support maximal power saving by device 200, the WUR is being used to support DRX in the main receiver 220.

The method illustrated in Figure 5 is such that the main receiver 220 (5G modem) is only woken up to receive when there is relevant data to be received in the main receiver DRX ON duration.

In order to facilitate full (WUR and main receiver) DRX operation of UE 200, another node in a network 300 is configured to periodically transmit a wake-up signal beacon 310, indicated in Figure 5 and having a repeat transmission period of 'a'. That beacon ensures that the WUR 210 remains aligned in time with operation of other nodes in the network. The node 300 may also be the node which indicates to the UE 200 that the WUR needs to be woken up and to transmit the (discontinuous) wake-up prompt 320.

The WUR 210 is configured to operate in a discontinuous reception mode and, subject to being aligned to a central timer via use of the WUS beacon, the WUR receiver 210 is configured to wake-up to monitor for a wake-up signal periodically. The period between the times the WUR is able to receive a wake-up signal is indicated by "b".

The UE 200 keeps alignment in time by means of the WUS beacon 310. There is a known time difference, "c", between transmission of a beacon signal 310 and the next WUS wake-up call 320.

The boxes of 210 illustrate times when the WUR receiver 210 is active to listen. The shaded boxes indicate instances when the WUR receiver actively "receives" information from other nodes and the wakeup receiver is active. When a WUS 400 is transmitted and received by WUR 210, the WUR is configured to trigger activation of the main receiver 220, and at step 500 the main receiver of the UE is active and able to commence DRX according to the main DRX period d.

It will be appreciated that whilst a WUS beacon as described in relation to Figure 5 is necessary to enable discontinuous reception by a wakeup receiver, implementation of such a beacon may be associated with some less desirable features. In particular:
a) It is very power consuming to provide a WUS beacon. This is especially critical if the transmitting end (for example, node 300) is battery powered. Such a scenario is likely in case of sidelink interfaces; and
b) Transmission of a WUS beacon is an inefficient use of radio resources which could have been used for data transfer.

### Inter- UE Communication: Sidelinks

Various communications methods are supported by communication standards. Particular cellular communication methods for UE within a network include provision of, for example, two air interfaces: (i) a Uu interface where a UE communicates with a base station network node via a conventional uplink/downlink interface; and (ii) a PC5 or "sidelink" (SL) interface, which supports direct communication amongst similar UE or devices as nodes in a network.

UE and devices within a network, including those using the SL communication interface, may also desirably achieve power savings.

One possible available power saving for UE using the SL communication interface is that of Sidelink Discontinuous Reception (SL-DRX). SL-DRX is a sidelink power saving feature which approved in communication standard. It is desired to enhance power saving and reliability and latency that may be available to UE and devices operating on sidelinks. To achieve power saving in SL-DRX it is necessary to address Sidelink DRX operation for broadcast, groupcast, and unicast cases, including features such as:
- Defining on- and off-durations in sidelink and specifying a corresponding UE procedure
- Specifying mechanism(s) to align sidelink DRX wake-up time amongst the UEs communicating with each other; and
- Specifying mechanism(s) to align sidelink DRX wake-up time with Uu DRX wake-up time in an in-coverage UE.

In cases where a sidelink interface is used to communicate between UE, standards support selection of a synchronization reference UE (SynchRef UE). The SynchRef UE is configured to broadcast a SideLink Synchronization Signal (SLSS) and a Side Link Master Information Block (SL-MIB) which, to some extent, has a similar purpose as a WUS beacon. However, a WUS beacon uses a different modulation and has a lower coverage, which means that selection of a SynchRef UE cannot be used as a way to select a key UE to broadcast a WUS beacon within a group.

### WUS Beacon Activation

Arrangements recognise that a UE may be configured such that it can request activation/deactivation of a WUS beacon. A UE may be configured to request activation or deactivation of a WUS beacon on a Uu air interface. In other words, a UE may request a WUS beacon via traditional uplink and downlink communication with a network node. A UE may be configured to request activation or deactivation of a WUS beacon on a PC5 (sidelink) interface.

According to some arrangements, a request for activation or deactivation may be confirmed by a receiving node. The confirmation may be confirmed to the requesting UE. The confirmation may further comprise a WUS configuration. The WUS configuration may comprise one or more detail relating to WUS beacon resources.

According to some arrangements, a request for activation of a WUS beacon may be rejected. Rejection may occur, for example, in a case where the channel is too busy to provide a beacon or in a case where the power consumption of transmitting the beacon is considered critical. If a WUS beacon request is rejected, a UE may still be configured to switch to use of a low power wakeup receiver. In such a case, the low power wakeup receiver may not be able to maintain time alignment and therefore needs to be continuously listening for the wakeup signal, rather than operating in DRX mode.

General arrangements provide procedures and appropriate signalling to support dynamic activation and deactivation of a WUS beacon. Dynamic activation and deactivation of a WUS beacon can be implemented in relation to both a Uu interface and a PC5 (sidelink) interface. Arrangements may implement one or more threshold specifying RSRP at which a UE can request a WUS beacon. Arrangements include signalling allowing the network to decide which sidelink resource(s) are used to support a WUS beacon transmitted by an in-coverage sidelink device.

Arrangements generally recognise that by providing a framework within which a WUS beacon can be dynamically activated and/or deactivated allows for an implementation in which the WUS beacon can be disabled when no UE needs such a beacon. Furthermore, some arrangement provide a framework according to which sidelink UE can share a WUS beacon. Overall, implementation of arrangements in accordance with the framework set out herein provides a mechanism to provide power and resource saving where appropriate within a network.

Having described a general implementation, a set of specific use cases are described in general and then in detail. In the description below, new messages are indicated to support proposed signalling. However, it will be appreciated that the information in such "new" messages may alternatively be embedded as new information elements within existing messages.

### UE in Uu coverage and potentially also in SL-DRX on a "in coverage" SynchRef UE (Use case A)

In the case where a UE is within Uu coverage (coverage of a network node) and potentially also in SL-DRX on a "in coverage" SynchRef UE (see above definition) then the UE may, in accordance with arrangements, be configured to perform a procedure set out below:
The UE may be configured to determine an indication of received signal strength from other nodes in the network. In particular, the UE may determine the signal strength from one or more network node and/or one or more other UE in a SL group. The indication of signal strength may, for example, comprise an indication of Reference Signal Received Power (RSRP) level.

Depending on, for example, the network node synchronisation signal RSRP (SS-RSRP) level and the SideLink Reference Signal Received Power (SL-RSRP) level, a UE may determine on which interface to request activation of an WUS beacon.

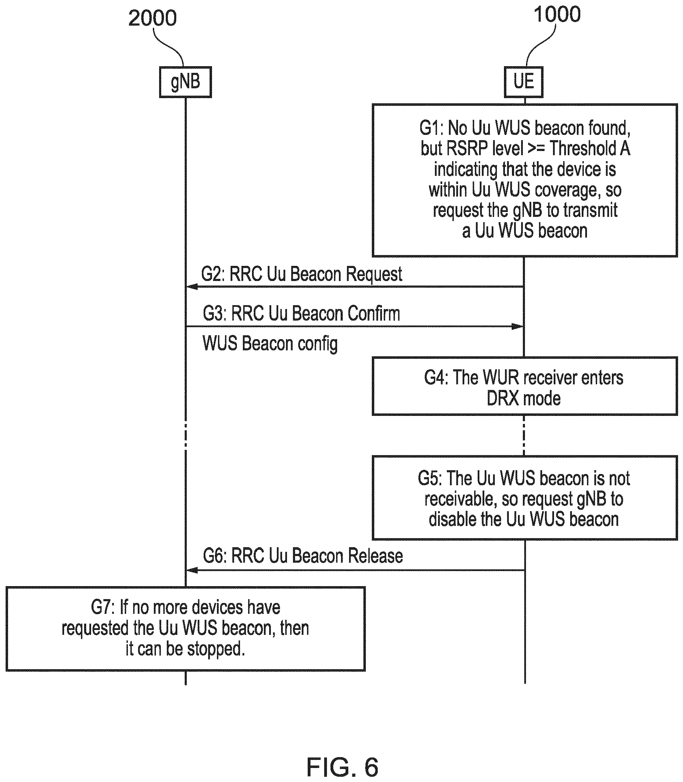

Determination may occur according to a range of possibilities including, for example, a straight comparison of RSRP. Various implementations of ways in which a determination may be performed are described generally below and then in more detail in relation to Figures 6 to 8.

### Use case A.1

If the UE determines that it is in good coverage of the serving cell, for example, the SS-RSRP level is greater than or equal to a predetermined RSRP threshold, threshold A, it may be configured to request activation of an WUS beacon from the gNB.

### Use case A.2

The UE may determine that the SS-RSRP is less than threshold A but the SL-RSRP is greater or equal to a SL RSRP threshold, threshold B.

The low (below threshold A) SS-RSRP indicates that the pathloss to the gNB is too high to deliver a WUS beacon above a sensitivity level of the wakeup receiver on the Uu interface. Threshold A is typically determined on the basis of whether it is sufficient to support delivery of a WUS beacon above a sensitivity level of the wakeup receiver.

High SL-RSRP (greater than or equal to threshold B) indicates that a WUS beacon is likely to be receivable from the SynchRef UE (as defined in 3GPP 38.331 V17.0.0 section 5.8.6 ("Sidelink synchronisation reference")).

In this case, the UE may be configured to request the WUS beacon on the PC5 interface from the SynchRef UE. In turn, the SynchRef UE may be configured to make an appropriate request to the gNB to make a semi-persistent reservation of the periodic SL resources reserved for a WUS beacon.

### Use case A.3

The UE may determine that the SS-RSRP is less than threshold A and the SL-RSRP is less than the SL RSRP threshold, threshold B. In this case, neither the serving cell nor the SynchRef UE is likely to be able to deliver a sufficiently strong WUS beacon.

In this scenario, the UE may be configured to send a groupcast or broadcast on the PC5 interface. That broadcast or groupcast may comprise a request for a WUS beacon from any in-coverage sidelink device that receives the request. The request from the UE may contain a minimum SL-RSRP level at which the WUS beacon request shall be received in order for the sidelink device to enable a WUS beacon (in one example, that threshold may be equivalent to previously mentioned threshold B).

In the case that multiple sidelink devices are candidates to broadcast the WUS beacon (i.e. multiple sidelink devices received the groupcasted/broadcasted WUS beacon request above the threshold), the contention may, according to some implementations, be resolved when the sidelink devices request appropriate WUS resources from the gNB. The gNB may be configured to select which of the WUS beacon resource requests to confirm and then may operate to reject any other associated WUS beacon resource request.

The procedures described generally above in relation to use case A envisage a UE which is configured to implement a WUS beacon activation request based upon an assessment of RSRP from nodes in a network and two known thresholds: threshold A and threshold B. Those thresholds may be known to the UE, for example, as a result of information provided by a network. In some implementations, the thresholds may be added to one of the System Information Blocks (SIBs) broadcast by the gNB (e.g. SIB2).

### UE is in SL-DRX on a "out of coverage" SynchRef UE (Use case B)

In this special case, where the UE is in SL-DRX on a "out of coverage" SynchRef UE, the slot and symbol timing of the SLSS will not be synchronized to the timing of the SSB from a potential serving cell of the UE.

In such case, it is not possible to have a common WUS beacon and the UE may therefore be configured to take one or more of the following actions:
(i) Request a separate WUS beacon on each interface.
(ii) Prioritize use of the wakeup receiver on the interface with the shortest DRX period (therefore offering the biggest power saving gain). The WUS beacon then needs to be activated/requested on the selected interface.
(iii) Use normal SL-DRX (using the main receiver and potentially with legacy PEI).

Having described the general operation of a request to activate a WUS beacon above, various possible signalling configurations to support such operation are described in more detail below:
Figure 6 is a signalling diagram illustrating one possible arrangement to activate and deactivate a WUS beacon. In particular, the signalling diagram relates to activation of a Uu WUS beacon by the gNB. In the arrangement illustrated, it is envisaged that deactivation of the beacon is mainly motivated by the gNB operating to save radio resources.

### Use case A.1 (Figure 6)

As shown in Figure 6, a UE 1000 is operating within a cell of a gNB base station 2000. The UE 1000 is configured to determine signal strength from network nodes, including gNB 2000. The UE 1000 may determine that use of a low power receiver (WUR) could be beneficial, for example, to maximise power saving, and entry to a mode in which the UE may operate with a DRX WUR may be determined to be desirable. The following steps in accordance with an implementation may be performed by nodes within a network:
G1: The UE 1000 may determine that no Uu WUS beacon is already available from gNB 2000. The UE may, however, determine that SS-RSRP level indicates that the device 1000 is within a region which supports Uu WUS coverage. As a result, the UE is configured to request that gNB 2000 transmit a Uu WUS beacon;
G2: The UE 1000 is configured to transmit a "RRC Uu Beacon Request" to the serving cell 2000 to request activation of a WUS beacon.
G3: In the case illustrated, the gNB 2000 accepts the request, and is configured to send back a "RRC Uu Beacon Confirm" message including information about the periodic recurring physical resources allocated for the WUS beacon. In other cases, the gNB 2000 may reject the request, in which case the UE may have to stay with continuous ("always on") WUS reception.
G4: Having received an acceptance, the UE 1000 may be configured to allow the wakeup receiver to enter discontinuous reception mode and retain timing alignment with the gNB by tracking the periodically recurring WUS beacon.
G5: If, at some point, the UE detects that the WUS beacon is no longer receivable it may be configured to continue with steps G6 and G7.
G6: the UE 1000 may be configured to send an "RRC Uu Beacon Release" indication to the gNB 2000 to indicate that the WUS beacon may be released.
G7: The gNB 2000 may be decid are still any UE's depending on the beacon and if no more UE's are depending on the beacon it may be released.

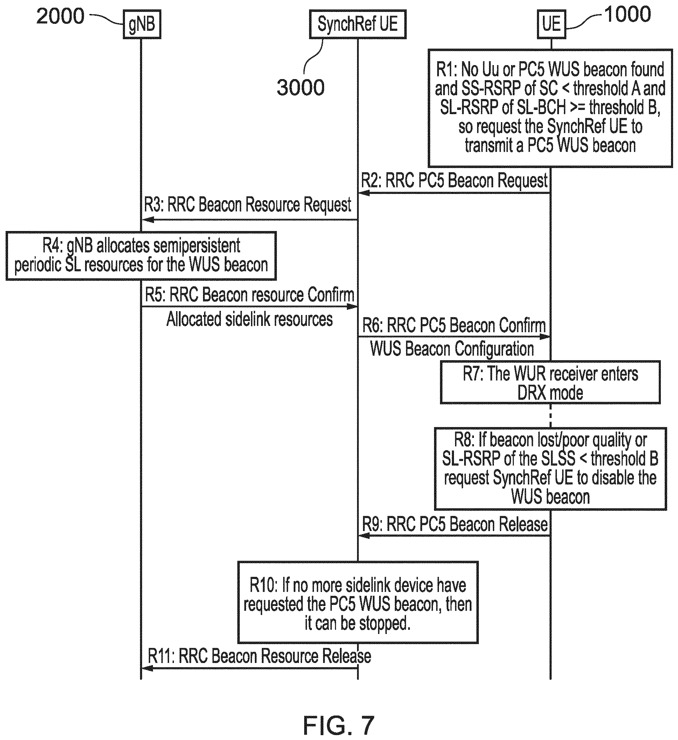

Figure 7 is a signalling diagram illustrating one possible arrangement to activate and deactivate a WUS beacon. In particular, Figure 7 relates to the activation and deactivation of a PC5 (sidelink) WUS beacon by a SynchRef UE 3000. In this case, deactivation of the WUS beacon may, for example, be motivated by power saving at the SynchRef UE 3000 and/or a need to save radio resources.

### Use case A.2 (Figure 7)

As shown in Figure 7, a UE 1000 is operating within a cell of a gNB base station 2000 and within a sidelink group, having a SynchRef UE 3000. The UE 1000 is configured to determine signal strength from network nodes, including gNB 2000 and SynchRef UE 3000. The UE 1000 may determine that use of a low power receiver (WUR) could be beneficial, for example, to maximise power saving, and entry to a mode in which the UE may operate with a DRX WUR may be determined to be desirable. The following steps in accordance with an implementation may be performed by nodes within a network:
R1: The UE 1000 determines that no existing Uu or PC5 WUS beacon is being received or is in operation. The UE determines that the SS-RSRP of SC < threshold A and the SL-RSRP of SL-BCH (SynchRef UE 3000) is greater than threshold B. As a result, the UE is configured to request the SynchRef UE 3000 (transmitting the SL-BCH) transmit a PC5 WUS beacon.
R2: The UE 1000 is configured to send a unicast "RRC PC5 Beacon Request" message to the SynchRef UE 3000.
R3: If the SynchRef UE 3000 determines that local parameters for supporting a WUS beacon are met (for example, if the SynchRef UE 3000 is not itself subject to a need to achieve power savings) then the SynchRef UE may in principle accept the WUS beacon request from UE 1000 and request that gNB 2000 allocate recurring sidelink resources for the WUS beacon.
R4: Provided the gNB 2000 determines that putting the WUR of UE 1000 into DRX and allowing SynchRef UE 3000 to support a WUS beacon is acceptable, it is configured to allocate appropriate recurring sidelink resources to the WUS beacon.
R5: If the gNB has allocated resources for the WUS beacon, it is configured to send an "RRC Beacon Resource Confirm" to SynchRef UE 3000, together with information about the allocated resources. Else, the gNB 2000 may be configured to send the SynchRef UE 3000 a rejection of the request.
R6: The SynchRef UE 3000 is configured to sends the UE 1000 a "RRC PC5 Beacon Confirm" together with a WUS beacon configuration.
R7: The wakeup receiver of UE 1000 is configured to enter discontinuous reception mode and retain timing alignment with the SynchRef UE (and the gNB) by tracking the periodically recurring WUS beacon transmitted by SynchRef UE 3000.
R8: If the UE 1000 determines that WUS beacon is lost or has poor quality, or if the SL-RSRP of the SLSS falls below threshold B then the UE 1000 may be configured to request SynchRef UE 3000 disable the WUS beacon.
R9: The UE may be configured to send "RRC PC5 Beacon Release" messaging to the SynchRef UE 3000.
R10: SynchRef UE 3000 may be configured to determine whether there are still any other UEs depending on the beacon. If not, the SynchRef UE 3000 may be configured to release the WUS beacon.
R11: SynchRef UE 3000 may be configured to send "RRC Beacon Resource Release" messaging to the gNB 2000 to release the sidelink resources allocated for the WUS beacon.

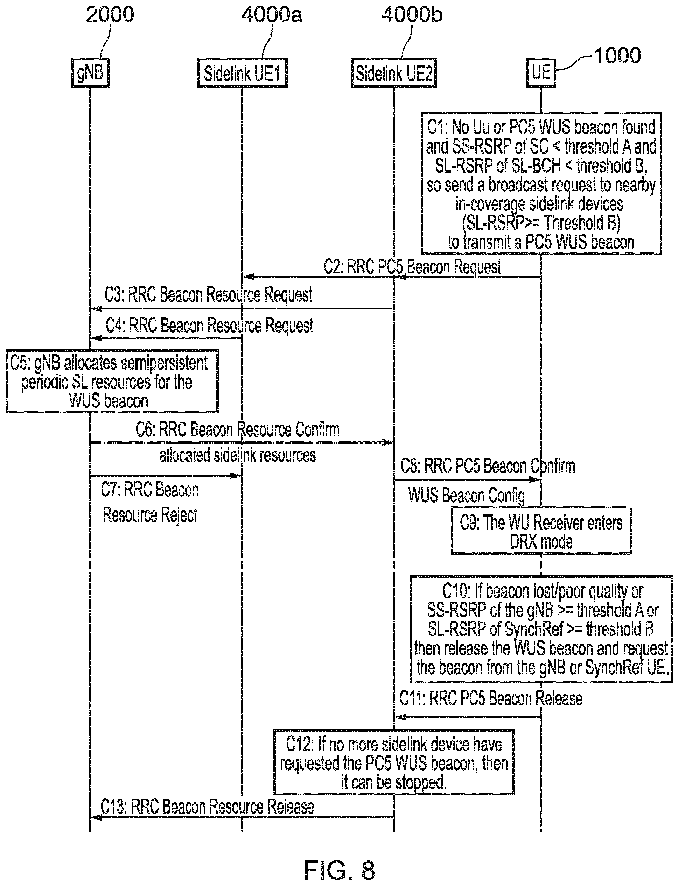

Figure 8 is a signalling diagram illustrating one possible arrangement to activate and deactivate a WUS beacon. In this instance, the arrangement relates to activation and deactivation of a PC5 (sidelink) interface WUS beacon. Deactivation of the WUS beacon may be motivated by power saving and/or saving physical resources and/or potential use of the wakeup receiver on the Uu interface.

### Use case A.3 (Figure 8)

As shown in Figure 8, a UE 1000 is operating within a cell of a gNB base station 2000 and within a sidelink group including further sidelink UE 4000a, 4000b. The UE 1000 is configured to determine signal strength from network nodes, including gNB 2000 and Sidelink UE 4000a, 4000b. The UE 1000 may determine that use of a low power receiver (WUR) could be beneficial, for example, to maximise power saving, and entry to a mode in which the UE may operate with a DRX WUR may be determined to be desirable. The following steps in accordance with an implementation may be performed by nodes within a network:
C1: The UE 1000 determines that no existing Uu or PC5 WUS beacon is being received or is in operation. The UE determines that the SS-RSRP of SC < threshold A and the SL-RSRP of SL-BCH (SynchRef UE 3000) is less than threshold B. The UE 1000 is then configured to send a broadcast request to nearby in-coverage sidelink devices 4000a, 4000b (which have a SL-RSRP >= Threshold B) asking them whether they can transmit a PC5 WUS beacon.
C2: UE 1000 is configured to broadcast a "RRC PC5 Beacon Request" to any nearby sidelink device 4000a, 4000b.
C3: Sidelink devices 4000a, 4000b capable of supporting WUS beacon transmission on the PC5 interface and which received and accepted the "RRC PC5 Beacon Request" above, are configured to transmit an "RRC Beacon Resource Request" to gNB 2000 requesting recurring sidelink resources for the WUS beacon.
C4: Since the broadcast by UE 1000 may have triggered multiple sidelink devices 4000a, 4000b to request resource for the WUS beacon, more than one of those sidelink UE may request resource from gNB 2000.
C5: The gNB 2000 may be configured to allocate semipersistent periodic SL resources for the WUS beacon and selects which (of more than one) request to confirm and which to reject.
C6: In the case that the gNB 2000 has accepted the resource request and is able to reserve the required sidelink resources, it is configured to send "RRC Beacon Resource Confirm" messagin, which may comprise information about the allocated resources to the selected sidelink device 4000b.
C7: Associated resource requests (C4) from other sidelink devices 4000a are rejected by gNB 2000. That is to say, for a given source UE 1000 only one beacon shall be activated.
C8: The sidelink device 4000b which receives the "RRC Beacon Resource Confirm" messaging from the gNB 2000 is configured to send an "RRC PC5 Beacon Confirm" message to the UE 1000 requesting the WUS beacon. That messaging may include WUS beacon configuration parameters.
C9: The wakeup receiver can enter discontinuous reception mode and retain timing alignment with the SynchRef UE (and gNB) by tracking the periodically recurring WUS beacon.
C10: If the UE 1000 determines that the WUS beacon lost or detects poor quality of the signal, or if SS-RSRP of the gNB is greater than or equal to threshold A or the SL-RSRP of SynchRef is greater than or equal to threshold B, then the UE 1000 is configured to release the WUS beacon as set out in steps below and request a WUS beacon from a gNB 2000 or SynchRef UE 3000 (as illustrated in Figures 6 and 7 respectively).
C11: The UE may be configured to send an "RRC PC5 Beacon Release" indication to the sidelink device 4000a providing the WUS beacon.
C12: The sidelink device 4000a providing the WUS beacon is configured to determine whether there are any other UEs which depending on the WUS beacon. If not, the WUS beacon can be released.
C13: The sidelink device 4000a is configured to send the "RRC Beacon Resource Release" to the gNB 2000 allowing for release of the sidelink resources allocated for the WUS beacon.

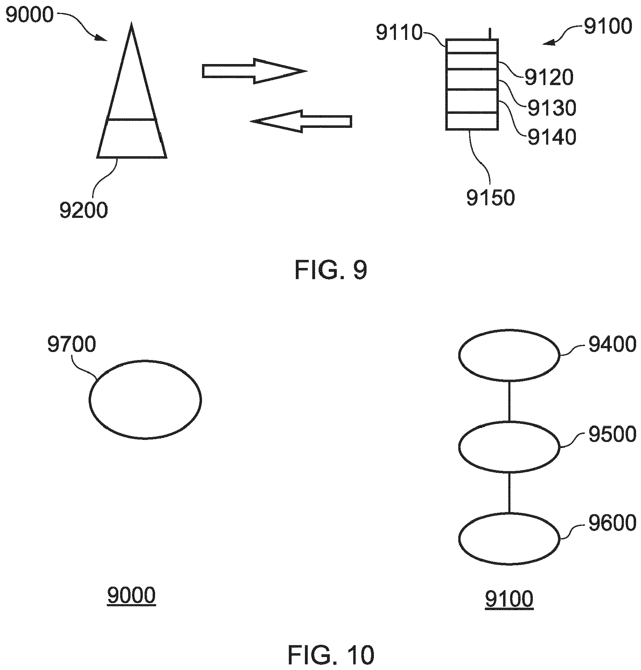

Figure 9 shows apparatus in a communication system according to an example embodiment. In particular Figure 9 illustrates a wireless communication network in which a transmitting node 9000 is configured to communicate with a UE 9100 equipped with a Wake-Up receiver and a main radio receiver. The transmitting node may comprise a base station, for example, a gNB, or may comprise another UE within a sidelink group, either a synchref UE or simply another group member.

A UE 9100 in accordance with one example embodiment may comprise: a wake-up signal receiver 9110; a main radio receiver 9120; circuitry for determining 9130 that the wake-up signal receiver is a candidate to implement discontinuous reception; circuitry for assessing a signal 9140 received by the apparatus from a transmitting network node; and circuitry for requesting 9150, based upon the assessment of the signal received, transmission of a timing synchronisation beacon to support implementation of discontinuous reception by the wake-up signal receiver from at least one transmitting network node.

The transmitting node 9000 in accordance with one example embodiment may comprise circuitry 9200 for receiving a request, from apparatus 9100 comprising a wake-up signal receiver and a main radio receiver, for transmission of a timing synchronisation beacon to support implementation of discontinuous reception by the wake-up signal receiver of said apparatus 9100.

Figure 10 shows a flow diagram illustrating steps in methods performed at network nodes according to some example embodiments as shown in Figure 9.

In particular, UE 9100 may be configured to perform the steps of:
9400: determining that a wake-up signal receiver, or an apparatus comprising a wakeup receiver and a main radio receiver, is a candidate to implement discontinuous reception;
9500: assessing a signal received by the apparatus from a transmitting network node; and
9600: requesting, based upon the assessment of the signal received, transmission of a timing synchronisation beacon to support implementation of discontinuous reception by the wake-up signal receiver from at least one transmitting network node.

Transmitting network node 9000 may be configured to perform the step of:
9700: receiving a request from an apparatus 9100 comprising a wake-up signal receiver and a main radio receiver for transmission of a timing synchronisation beacon to support implementation of discontinuous reception by the wake-up signal receiver of said apparatus 9100.

A person of skill in the art would readily recognize that steps of various above-described methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
a wake-up signal receiver;
a main radio receiver;
means for determining that the wake-up signal receiver is a candidate to implement discontinuous reception;
means for assessing a signal received by the apparatus from a transmitting network node; and
means for requesting, based upon the assessment of the signal received, transmission of a timing synchronisation beacon to support implementation of discontinuous reception by the wake-up signal receiver from at least one transmitting network node.

2. An apparatus according to claim 1, wherein the means for assessing is configured to assess whether a timing synchronisation beacon to support implementation of discontinuous reception by the wake-up signal receiver is being transmitted from a transmitting network node.

3. An apparatus according to claim 1 or claim 2, wherein the means for assessing is configured to assess whether a strength of signal received from a transmitting network node is greater than or equal to a predetermined threshold.

4. An apparatus according to claim 3, wherein the predetermined threshold comprises a signal strength at which a signal from a transmitting node is received at the apparatus indicative that a timing signal beacon transmitted from the transmitting network node could be received by the wake-up signal receiver.

5. An apparatus according to claim 3 or claim 4, wherein the predetermined threshold depends upon: wake-up signal receiver sensitivity, and optionally wherein the predetermined threshold depends upon: transmitting network node type; and optionally wherein the transmitting network node type comprises at least one of: a network access node; a synchronisation reference network node of a sidelink group of which the apparatus is a member; and a transmitting network node which is a member of a sidelink group of which the apparatus is also member.

6. An apparatus according to any preceding claim, wherein the apparatus comprises:
means for selecting a transmitting network node to send a request, based upon the assessment of the signal received.

7. An apparatus according to claim 6, wherein the means for selecting is configured to select:
a network access node meeting a signal strength requirement indicative that a timing signal beacon transmitted from a network access node could be received by the wakeup signal receiver in preference to
a sidelink network node meeting a signal strength requirement indicative that a timing signal beacon transmitted from a sidelink access node could be received by the wakeup signal receiver.

8. An apparatus according to claim 6 or claim 7, wherein the means for selecting is configured to select:
a synchronisation reference network node of a sidelink group meeting a signal strength requirement indicative that a timing signal beacon transmitted from a sidelink access node could be received by the wake-up signal receiver in preference to another sidelink network node meeting a signal strength requirement indicative that a timing signal beacon transmitted from a sidelink access node could be received by the wake-up signal receiver.

9. An apparatus according to any one of claims 6 to 8, wherein if the means for selecting determines that the assessment of the signal received indicates that:
no network access node meeting a signal strength requirement indicative that a timing signal beacon transmitted from a network access node could be received by the wakeup signal receiver is available; and
no synchronisation reference network node of a sidelink group meeting a signal strength requirement indicative that a timing signal beacon transmitted from a sidelink access node could be received by the wake-up signal receiver is available; then selecting any other sidelink network node meeting the signal strength requirement indicative that a timing signal beacon transmitted from a sidelink access node could be received by the wake-up signal receiver.

10. An apparatus according to any one of claims 6 to 9, wherein if the means for selecting determines that the assessment of the signal received indicates that:
a network access node meeting a signal strength requirement indicative that a timing signal beacon transmitted from a network access node could be received by the wakeup signal receiver is available; and
a synchronisation reference network node of a sidelink group meeting a signal strength requirement indicative that a timing signal beacon transmitted from a sidelink access node could be received by the wake-up signal receiver is available;
and the synchronisation reference network node is determined to be out of coverage of the network access node; then
selecting both the network access node and the out of coverage synchronisation reference network node.

11. An apparatus according to any one of claims 6 to 10, wherein if the means for selecting determines that the assessment of the signal received indicates that:
a network access node meeting a signal strength requirement indicative that a timing signal beacon transmitted from a network access node could be received by the wakeup signal receiver is available; and
a synchronisation reference network node of a sidelink group meeting a signal strength requirement indicative that a timing signal beacon transmitted from a sidelink access node could be received by the wake-up signal receiver is available;
and the synchronisation reference network node is determined to be out of coverage of the network access node; then
selecting one of the network access node and the out of coverage synchronisation reference network node in dependence upon which is determined to have the shortest discontinuous reception period.

12. An apparatus according to any preceding claim, wherein the apparatus comprises:
means for receiving a response to the request for transmission of a timing synchronisation beacon to support implementation of discontinuous reception by the wake-up signal receiver from the at least one transmitting network node.

13. An apparatus according to claim 12, wherein the apparatus comprises means to select a discontinuous reception regime to implement, where more than one response to the request for transmission of a timing synchronisation beacon to support implementation of discontinuous reception by the wake-up signal receiver from more than one transmitting network node is received and optionally wherein the means to select a discontinuous reception regime to implement is configured to use the wakeup receiver in relation to the transmitting network node which sent a response and has the shortest discontinuous reception period.

14. An apparatus comprising:
means for receiving a request, from apparatus comprising a wake-up signal receiver and a main radio receiver, for transmission of a timing synchronisation beacon to support implementation of discontinuous reception by the wake-up signal receiver of said apparatus.

15. A method, comprising:
determining that a wake-up signal receiver, or an apparatus comprising a wake-up receiver and a main radio receiver, is a candidate to implement discontinuous reception;
assessing a signal received by the apparatus from a transmitting network node; and
requesting, based upon the assessment of the signal received, transmission of a timing synchronisation beacon to support implementation of discontinuous reception by the wake-up signal receiver from at least one transmitting network node.
